# EUROPÄISCHE PATENTANMELDUNG

(11) **EP 2 586 590 A1**
(43) Veröffentlichungstag der Anmeldung: **01.05.2013**
(21) Anmeldenummer: 11008687.3
(22) Anmeldetag: 29.10.2011
(51) Int. Cl.: B29C 51/46, B23Q 17/09

(54) **Verfahren zum Betreiben einer Thermoformmaschine und Thermoformmaschine**

(71) Anmelder: Gabler Thermoform GmbH & Co. KG, 23568 Lübeck (DE)
(72) Erfinder: Rowedder, Axel, 23623 Ahrensbök (DE)
(74) Vertreter: Grosse, Wolf-Dietrich Rüdiger

(57) **Zusammenfassung**

Die Erfindung betrifft ein Verfahren zum Betreiben einer Thermoformmaschine (1) zum Formen von Artikeln aus Kunststoff, bei dem zwischen den mindestens zwei Teilen eines geöffneten Werkzeugs (2, 3) eine Kunststofffolienbahn (4) platziert wird, das Werkzeug (2, 3) dann geschlossen wird, indem die mindestens zwei Teile des Werkzeugs (2, 3) in eine Schließrichtung (S) relativ zueinander bewegt werden, der Artikel dann ausgeformt und aus der Folienbahn (4) zumindest partiell ausgestanzt wird. Um den Thermoformprozess effizient überwachen und insbesondere Fehleinstellungen rechtzeitig erkennen zu können, sieht die Erfindung vor, a) dass ein Messen einer auf die Thermoformmaschine (1) wirkenden Belastungsgröße (a, s, σ) erfolgt, b) dass die gemessene Belastungsgröße (a, s) mit einem gespeicherten Wert (a₀, s₀, σ₀) verglichen wird und c) dass ein Signal ausgegeben wird, sobald die gemessene Belastungsgröße (a, s, σ) über dem gespeicherten Wert (a₀, s₀, σ₀) liegt. Desweiteren betrifft die Erfindung eine Thermoformmaschine.

## Beschreibung

Die Erfindung betrifft ein Verfahren zum Betreiben einer Thermoformmaschine zum Formen von Artikeln aus Kunststoff, bei dem zwischen den mindestens zwei Teilen eines geöffneten Werkzeugs eine Kunststofffolienbahn platziert wird, das Werkzeug dann geschlossen wird, indem die mindestens zwei Teile des Werkzeugs in eine Schließrichtung relativ zueinander bewegt werden, der Artikel dann ausgeformt und aus der Folienbahn zumindest partiell ausgestanzt wird. Desweiteren betrifft die Erfindung eine Thermoformmaschine.

Eine Thermoformmaschine der gattungsgemäßen Art ist beispielsweise aus der DE 91 08 344 U1 bekannt. Dort werden zwischen den relativ zueinander beweglichen Teilen eines Werkzeugs Kunststoffartikel (beispielsweise Margarineschalen, Trinkbecher, Behälterdeckel) aus thermoplastischen Kunststofffolien und Verbundfolien produziert. Dabei werden in der geschlossenen Stellung des aus Ober- und Unter-Werkzeug bestehenden Werkzeugs die Artikel geformt, indem die erwärmte Folie mit Druckluft in die Werkzeugkavität gedrückt wird, dann gestanzt und anschließend bei geöffneter Stellung des Werkzeugs aus diesem heraus und in eine nachgeschaltete Stapel- und Zählvorrichtung gefördert wird. Das Oberteil des Werkzeugs der Maschine ist hier an ein starres Querjoch (Querbrücke) montiert; das Unterteil des Werkzeugs ist indes höhenbeweglich sowie vorzugsweise schwenkbar ausgestaltet.

Bei allen Thermoformmaschinen der gattungsgemäßen Art muss das Werkzeug periodisch geschlossen und wieder geöffnet werden, wofür ein Bewegungselement eingesetzt wird.

Dabei wird aus Gründen der Wirtschaftlichkeit natürlich angestrebt, eine maximal mögliche Anzahl Artikel pro Zeiteinheit auf der Thermoformmaschine zu fertigen, weshalb auch pro Zyklus eine möglichst große Anzahl an Artikeln gefertigt werden soll. Allerdings wird auch die Belastung der Maschine in dem Maße größer, je mehr Artikel pro Hub vom Werkzeug ausgestanzt werden.

Um die Maschine nicht zu überlasten, ist sicherzustellen, dass die relevanten Maschinenkomponenten und insbesondere das Werkzeug ordnungsgemäß eingesetzt werden und einwandfrei arbeiten. Dies wird über Wartungspläne und entsprechend gewählte Wartungsintervalle zu gewährleisten versucht. Allerdings kommt es immer wieder zu frühzeitigen Maschinenstillständen.

Die Ausfallursache ist dabei überwiegend der unsachgemäße Gebrauch der Anlage. Hier ist insbesondere zu nennen: ein falsch projektiertes Werkzeug, eine zu große Schneidenlänge und somit eine zu große Belastung, eine unzureichende Schneidenschärfe infolge Verschleißes und nicht eingehaltene Wartungsintervalle, eine unzureichende Foliengüte, eine unzureichende Folientemperatur, eine unzureichende Einrichtung des Werkzeugs, Schneiden des Oberwerkzeugs und des Unterwerkzeugs, die nicht planparallel eingerichtet worden sind, Schneiden des Oberwerkzeugs und des Unterwerkzeugs, die nicht koaxial eingerichtet sind, eine unzureichend aufgestellte bzw. eingestellte Maschine.

Auswirkung bei den oben genannten Unzulänglichkeiten ist eine erhöhte Schneidkraft und das Auftreten übermäßig großer Stöße während des Prozesses, d. h. von sogenannten Schocks.

Derartige Schocks entstehen generell und insbesondere unmittelbar nach dem Durchstanzen. Die Folie wird vor dem eigentlichen Formen angestanzt, dann mittels eines Stempels (Vorstrecker) und Druckluft verformt und anschließend durch einen weiteren, kleinen Maschinenhub ausgestanzt. Unmittelbar nach dem Durchstanzen der Folie wird die im Maschinengestell gespeicherte Federenergie, hervorgerufen durch Elastizitäten in der Maschine, freigesetzt. Die Maschinen-Verformungen stellen sich dann in sehr kurzer Zeit zurück. Messungen beim Auftreten der oben genannten Unzulänglichkeiten haben Beschleunigungen an den Bauteilen der Maschine von mehr als 100 g ergeben, d. h. im Bereich von mehr als 1.000 m/s². Die Größenordnung auftretender Durchbiegungen liegt im Bereich von mehreren Zehnteln mm im Werksbetrieb mit einer neuwertigen Maschine und einem neuen Werkzeug und kann auf das Doppelte und mehr ansteigen.

Verfahrensbedingt muss die Folie nach der Erwärmung zunächst angestanzt werden; der Hubtisch verweilt in dieser Position zwecks Ausformung der Artikel mit Druckluft, um dann wieder anzufahren und schließlich die Folie durchzustanzen. Der Schnitt erfolgt überwiegend im Matrizenverfahren und es werden nicht unerhebliche Schocks initiiert, sobald die Stempel des Werkzeugs das Material durchdringen. Die Schockgröße wird im wesentlichen beeinflusst von der Werkzeuggüte, der Schneidenlänge, der Schneidenschärfe, der Maschinengüte, der Materialgüte, der Materialtemperatur und der Materialstärke. Dabei hat das Einrichten der Maschine einen wesentlichen Einfluss. Das noch warme Material soll möglichst weit angestanzt werden, um so die ausgekühlte Restmaterialstärke und somit die Stanzkraft und die initiierten Schocks möglichst gering zu halten.

Häufig werden in der Praxis allerdings fehlerhafte Bedingungen zugelassen bzw. in Kauf genommen, insbesondere wird die zulässige Werkzeugschnittlänge überschritten, das Werkzeug falsch eingerichtet, eine unzulängliche oder keine Werkzeugwartung vorgenommen, ein unzulängliches oder falsches Folienmaterial eingesetzt, die Maschine falsch eingerichtet und eine abweichende Foliendicke durch Extruderfehler eingesetzt.

Die beschriebenen Schocks belasten die mechanischen Komponenten der Maschine zusätzlich zu den statischen Stanzkräften. Besonders problematisch sind Elektrokomponenten, wie Kabel, Stecker, Klemmen, Motoren, Lüfter, Drehgeber, usw., da diese besonders schocksensibel sind.

Der Erfindung liegt die **Aufgabe** zugrunde, ein Verfahren zum Betreiben einer Thermoformmaschine sowie eine Thermoformmaschine vorzuschlagen, mit dem bzw. mit der es möglich ist, den Thermoformprozess effizient überwachen und insbesondere Fehleinstellungen der Maschine und vor allem des Werkzeugs rechtzeitig erkennen zu können, so dass einerseits ein unnötiger Maschinenservice vermieden werden kann, andererseits aber rechtzeitig beim Vorliegen der entsprechenden Umstände für eine Maschinen- bzw. Werkzeugwartung Sorge getragen werden kann.

Die **Lösung** dieser Aufgabe durch die Erfindung ist verfahrensgemäß dadurch gekennzeichnet,
a) dass zu vorgegebenen Zeitpunkten, z. B. periodisch in vorgegebenen Zeitintervallen, ein Messen einer auf die Thermoformmaschine wirkenden Belastungsgröße erfolgt,
b) dass die gemessene Belastungsgröße mit einem gespeicherten Wert verglichen wird und
c) dass ein Signal ausgegeben wird, sobald die gemessene Belastungsgröße über dem gespeicherten Wert liegt oder das Verhältnis des gemessenen Wertes der Belastungsgröße zum gespeicherten Wert der Belastungsgröße einen vorgegebenen Wert übersteigt.

Die Belastungsgröße ist dabei bevorzugt die mit einem Beschleunigungsaufnehmer ermittelte Beschleunigung und/oder eine Auslenkung eines Maschinenteils der Thermoformmaschine und/oder eine Spannung in einem Maschinenteil der Thermoformmaschine.

Die erfindungsgemäße Thermoformmaschine zeichnet sich dadurch aus, dass die Thermoformmaschine mit Sensormitteln versehen ist, mit denen mindestens eine auf die Thermoformmaschine wirkende Belastungsgröße gemessen werden kann, dass die Thermoformmaschine weiterhin Steuerungsmittel aufweist, die zur Speicherung mindestens einer vorgegebenen Belastungsgröße und zum Vergleich der gemessenen Belastungsgröße mit der vorgegebenen Belastungsgröße ausgebildet ist, und dass die Thermoformmaschine weiterhin Signalmittel aufweist, die von den Steuerungsmitteln angesteuert werden können.

Die Signalmittel sind insbesondere als akustische Alarmmittel ausgebildet. Bevorzugt ist auch eine Realisierung als optisches Mittel, nämlich entweder als Signallicht oder als Hinweis auf einem Bildschirm.

Die Sensormittel können einen Beschleunigungssensor, einen Wegsensor und/oder einen Dehnmessstreifen umfassen.

Die Sensormittel sind dabei bevorzugt auf einem Oberjoch angeordnet, das eines der Werkzeugteile trägt, wobei das Sensormittel bevorzugt mittig auf dem Oberjoch angeordnet ist. Gemäß einer weiteren bevorzugten Ausgestaltung ist vorgesehen, dass das Oberjoch ein ortsfestes Teil des Werkzeugs trägt.

Mit der vorgeschlagenen Vorgehensweise sowie der korrespondierenden Thermoformmaschine kann die Verfügbarkeit der Maschine signifikant erhöht werden. Es ist möglich, ungeplante Reparatur- und Wartungsarbeiten zu reduzieren. Der korrekte Betrieb der Thermoformmaschine kann verbessert und gewährleistet werden, da Rückschlüsse auf die richtigen Maschinen- bzw. Werkzeugeinstellungen möglich sind, wodurch die Wartungsintervalle maßgeblich verlängert werden können.

Demgemäß wird in der Thermoformmaschine mit einfachen Mitteln eine Prozessüberwachung vorgesehen. Diese ist Bestandteil der Maschine selber, somit unabhängig vom konkret eingebauten Werkzeug.

Vorzugsweise wird die Sensorik auf dem oberen, starren Maschinenoberteil des Maschinenrahmens, d.h. auf dem Oberjoch platziert, möglichst mittig der Biegelinie. Das Oberjoch ist zumeist als Gussteil ausgeführt und unterliegt Durchbiegungen und Schocks, so dass eine verlässliche Auswertung möglich ist. Generell sind aber auch andere Messorte möglich.

Als Sensor eignen sich Dehnungsmessstreifen, die Spannungen bzw. Verformungen erfassen, also eine statische Last. Beschleunigungsaufnehmer können gleichermaßen zur Überwachung eingesetzt werden, mit denen dynamische Lasten erfasst werden können. Generell werden so Beschleunigungen, Geschwindigkeiten und/oder Wege des Bauteils der Thermoformmaschine erfasst.

Die von der Sensorik ermittelten Belastungen werden von der Maschinensteuerung ausgewertet. Wird ein voreingestellter Grenzwert erreicht, wird der Bediener gewarnt, wahlweise kann auch direkt die Maschine abgeschaltet werden. Zudem kann über eine Aufzeichnung des Belastungswertes über der Zeit der Anwender den Verschleiß von Maschine und Werkzeug beobachten und beurteilen.

Wartungsarbeiten können so geplant werden, dass die Stillstandzeiten minimiert werden und somit die Produktivität der Anlage erhöht wird.

Generell gilt: Mit stumpfer werdenden Schneiden nimmt die Maschinenbelastung zu. Nähert sich die Belastung einem absoluten Grenzwert, kann der Bediener der Thermoformmaschine beispielsweise per optischer Anzeige auf dem Bildschirm der Steuerung und/oder auch per akustischem Signal darauf hingewiesen werden, dass sich Betriebsparameter soweit verschlechtert haben, dass eine Wartungsmaßnahme ergriffen werden muss. Das betrifft vor allem stumpf gewordene Werkzeugschneiden, Mängel an der Maschine (unparallele Formstation, Schwenktischzentrierung mangelhaft, ausgeschlagene Buchsen) oder auch Folienmängel (Zusammensetzung, Temperatur und Dicke der Folie).

Demgemäß erlaubt die Erfindung eine Überwachung, Optimierung und ein bestmögliches Einrichten der Produktionsbedingungen bzw. der Maschine und des Werkzeugs. Neben Einrichtfehlern und Werkzeugverschleiß können gleichermaßen Maschinenverschleiß bzw. Maschinendefekte sowie eine nicht korrekt aufgestellte Maschine (z. B. aufgrund fehlerhafter Fundamente) festgestellt werden. Die Gewährleistungskosten können dadurch reduziert werden.

Bezogen auf die Maschinen-Gebrauchsdauer können Defekte und verschlissene Werkzeuge frühzeitig erkannt werden, was die Verfügbarkeit der Maschine erhöht. Somit ist auch die Prozesssicherheit höher.

Mit der vorgeschlagenen Maßnahme bzw. Ausgestaltung kann eine effektive Prozessüberwachung vorgenommen werden, die Bestandteil der Maschine ist. Möglich ist auch eine Prozessoptimierung dahingehend, dass der Benutzer der Maschine automatisch oder zumindest unterstützt durch die Messwerte die optimale Maschineneinrichtung findet.

In der Zeichnung ist ein Ausführungsbeispiel der Erfindung dargestellt. Es zeigen:

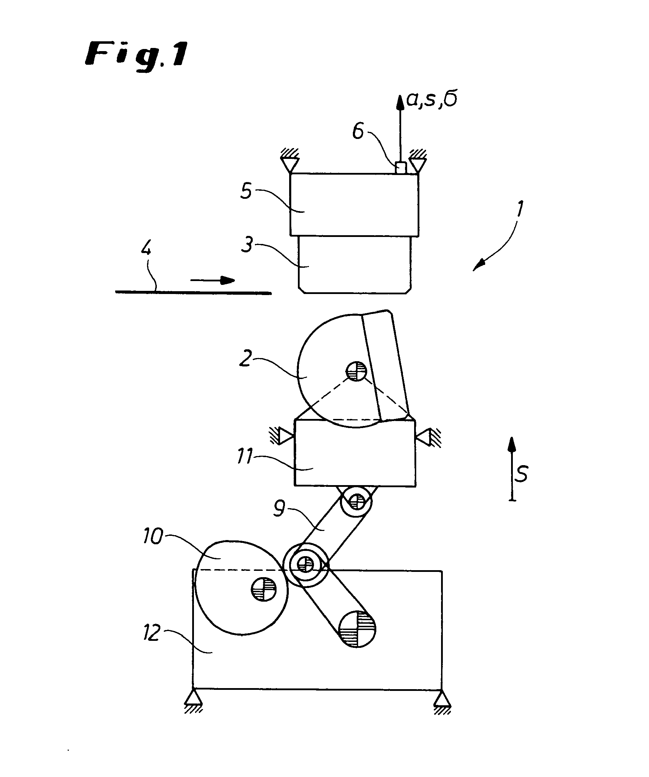

- Fig. 1: schematisch eine Thermoformmaschine mit noch geöffnetem Werkzeug; und
- Fig. 2: in der Darstellung gemäß Fig. 1 die Thermoformmaschine bei geschlossenem Werkzeug.

In den Figuren ist eine Thermoformmaschine 1 zu sehen, die ein Werkzeug 2, 3 einsetzt, um Artikel aus Kunststoff aus einer Kunststoffbahn 4 auszuformen. Der Thermoformprozess ist hinlänglich bekannt, wozu beispielsweise auf die DE 91 08 344 U1 Bezug genommen wird. An einem ortsfesten Oberjoch 5 ist ein festes Werkzeugteil 3 angeordnet. Das andere Werkzeugteil 2 ist indes als bewegliches Werkzeugteil ausgeführt und kann sich relativ zum festen Werkzeugteil 3 bewegen. Dabei kann eine kombinierte translatorische und Schwenkbewegung zum Einsatz kommen, um nach dem Ausformen von Artikeln diese einfacher aus der Maschine abzuführen und zu stapeln. Die Bewegung des Werkzeugs und insbesondere des beweglichen Werkzeugteils 2 wird von einem Kniehebel 9 bewerkstelligt, an dem eine Kurvenscheibe 10 ansetzt. Durch diesen Bewegungsmechanismus wird ein Untertisch 11, auf dem das bewegliche Werkzeugteil 2 angebracht ist, relativ zu einem Unterjoch 12 bewegt.

Bei der Bewegung der Kurvenscheibe 10 wird demgemäß das Werkzeug 2, 3 geöffnet bzw. geschlossen; die Werkzeugschließrichtung ist mit S angegeben.

Wesentlich ist, dass die Thermoformmaschine 1 mit Sensormitteln 6 versehen ist. Vorliegend sind diese als Beschleunigungssensor ausgebildet und auf dem ortsfesten Oberjoch 5 angeordnet. Generell gilt, dass die Sensormittel 6 ausgebildet sind, um insbesondere eine Beschleunigung a (in Werkzeugschließrichtung S), eine Auslenkung s und/oder eine Spannung σ zu messen.

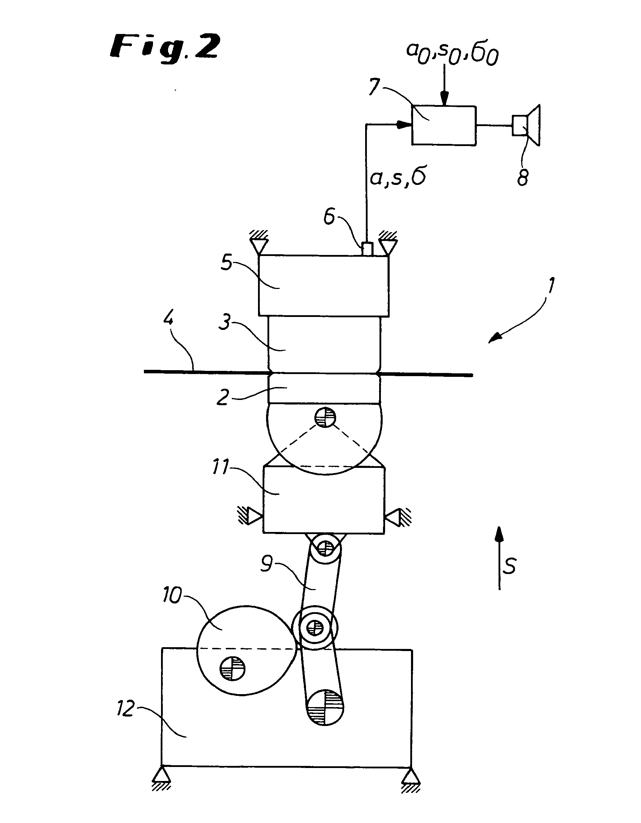

Wie in Fig. 2 schematisch angedeutet ist, wird der von den Sensormitteln 6 gemessene Ist-Wert (für die Beschleunigung a, die Auslenkung s bzw. die Spannung σ) zu Steuerungsmitteln 7 geleitet. Diese weisen unter anderem einen Speicher auf, in dem Basiswerte gespeichert werden können, die für die jeweilige Größe definiert sind, also insbesondere einen Basiswert a₀ für die Beschleunigung, einen Basiswert s₀ für die Auslenkung bzw. einen Basiswert σ₀ für die Spannung.

In den Steuerungsmitteln 7 erfolgt ein Vergleich der gemessenen Werte a, s, σ mit den gespeicherten Basiswerten a₀, s₀, σ₀. Ab einem vorgegebenen Verhältniswert zwischen den Werten wird über Signalmittel 8 ein Hinweis bzw. Alarm an den Maschinenbediener ausgegeben, der darauf hinweist, dass sich die Belastungsgröße der Maschine einem kritischen Grenzwert nähert bzw. diesen erreicht hat.

Die Signalmittel 8 können dabei in verschiedener Weise realisiert sein. Im einfachsten Falle wird am Maschinendisplay ein entsprechender Hinweis angezeigt. Genauso ist es aber auch möglich, einen akustischen Hinweis auszugeben, der auf die sich verschlechternden Betriebsparameter hinweist.

### Bezugszeichenliste:

- 1: Thermoformmaschine
- 2,3: Werkzeug
- 2: bewegliches Werkzeugteil (Unterwerkzeug)
- 3: festes Werkzeugteil (Oberwerkzeug)
- 4: Kunststofffolienbahn
- 5: Maschinenoberteil (Oberjoch)
- 6: Sensormittel
- 7: Steuerungsmittel
- 8: Signalmittel / Alarmmittel
- 9: Kniehebel
- 10: Kurvenscheibe
- 11: Untertisch
- 12: Unterjoch

- S: Schließrichtung
- a, s, σ: Belastungsgröße
- a: Beschleunigung
- s: Auslenkung
- σ: Spannung

- a₀: Basiswert Beschleunigung
- s₀: Basiswert Auslenkung
- σ₀: Basiswert Spannung

## Patentansprüche

1. Verfahren zum Betreiben einer Thermoformmaschine (1) zum Formen von Artikeln aus Kunststoff, bei dem zwischen den mindestens zwei Teilen eines geöffneten Werkzeugs (2, 3) eine Kunststofffolienbahn (4) platziert wird, das Werkzeug (2, 3) dann geschlossen wird, indem die mindestens zwei Teile des Werkzeugs (2, 3) in eine Schließrichtung (S) relativ zueinander bewegt werden, der Artikel dann ausgeformt und aus der Folienbahn (4) zumindest partiell ausgestanzt wird,
**dadurch gekennzeichnet,**
a) **dass** ein Messen einer auf die Thermoformmaschine (1) wirkenden Belastungsgröße (a, s, σ) erfolgt,
b) **dass** die gemessene Belastungsgröße (a, s, σ) mit einem gespeicherten Wert (a₀, s₀, σ₀) verglichen wird und
c) **dass** ein Signal ausgegeben wird, sobald die gemessene Belastungsgröße (a, s, σ) über dem gespeicherten Wert (a₀, s₀, σ₀) liegt oder das Verhältnis des gemessenen Wertes der Belastungsgröße (a, s, σ) zum gespeicherten Wert der Belastungsgröße (a₀, s₀, σ₀) einen vorgegebenen Wert übersteigt.

2. Verfahren nach Anspruch 1, **dadurch gekennzeichnet, dass** die Belastungsgröße die Beschleunigung (a) eines Maschinenteils (5) der Thermoformmaschine (1) ist.

3. Verfahren nach Anspruch 1, **dadurch gekennzeichnet, dass** die Belastungsgröße eine Auslenkung (s) eines Maschinenteils (5) der Thermoformmaschine (1) ist.

4. Verfahren nach Anspruch 1, **dadurch gekennzeichnet, dass** die Belastungsgröße eine Spannung (σ) in einem Maschinenteil (5) der Thermoformmaschine (1) ist.

5. Thermoformmaschine (1) zum Formen von Artikeln aus Kunststoff, umfassend ein aus mindestens zwei Teilen bestehendes Werkzeug (2, 3), insbesondere zur Durchführung des Verfahrens nach einem der Ansprüche 1 bis 4,
**dadurch gekennzeichnet,**
**dass** die Thermoformmaschine (1) mit Sensormitteln (6) versehen ist, mit denen mindestens eine auf die Thermoformmaschine (1) wirkende Belastungsgröße (a, s, σ) gemessen werden kann, dass die Thermoformmaschine (1) weiterhin Steuerungsmittel (7) aufweist, die zur Speicherung mindestens einer vorgegebenen Belastungsgröße (a₀, s₀, σ₀) und zum Vergleich der gemessenen Belastungsgröße (a, s, σ) mit der vorgegebenen Belastungsgröße (a₀, s₀, σ₀) ausgebildet ist, und dass die Thermoformmaschine (1) weiterhin Signalmittel (8) aufweist, die von den Steuerungsmitteln (7) angesteuert werden können.

6. Thermoformmaschine nach Anspruch 5, **dadurch gekennzeichnet, dass** die Sensormittel (6) einen Beschleunigungssensor umfassen.

7. Thermoformmaschine nach Anspruch 5, **dadurch gekennzeichnet, dass** die Sensormittel (6) einen Wegsensor umfassen.

8. Thermoformmaschine nach Anspruch 5, **dadurch gekennzeichnet, dass** die Sensormittel (6) einen Dehnmessstreifen umfassen.

9. Thermoformmaschine nach einem der Ansprüche 5 bis 8, **dadurch gekennzeichnet, dass** die Sensormittel (6) auf einem Oberjoch (5) angeordnet sind, das eines der Werkzeugteile (2, 3) trägt, wobei das Sensormittel (6) bevorzugt mittig auf dem Querjoch (5) angeordnet ist.

10. Thermoformmaschine nach Anspruch 9, **dadurch gekennzeichnet, dass** das Oberjoch (5) ein ortsfestes Teil (3) des Werkzeugs (2, 3) trägt.
